# EUROPÄISCHE PATENTSCHRIFT

(11) **EP 1 642 790 B1**
(45) Veröffentlichungstag und Bekanntmachung des Hinweises auf die Patenterteilung: **11.04.2007**
(21) Anmeldenummer: 05021424.6
(22) Anmeldetag: 30.09.2005
(51) Int. Cl.: B60R 25/00

(54) **Steuermittel für eine Anordnung zum Sichern und Entsichern eines Kraftfahrzeugs**
Control means for enabling and desabling an anti-thef devise of a vehicle
Moyens de contrôle pour l'activation et la déactivation d'un système anti-vol dans un véhicule

(30) Priorität: 04.10.2004 DE 102004048571
(43) Veröffentlichungstag der Anmeldung: 05.04.2006
(73) Patentinhaber: Hella KGaA Hueck & Co., 59552 Lippstadt (DE); Volkswagen Aktiengesellschaft, 38436 Wolfsburg (DE)
(72) Erfinder: Grave, Dietmar, 38116 Braunschweig (DE); Wick, Christian, 38162 Cremlingen (DE); Grossmann, Markus, 38518 Gifhorn (DE); Schütte, Guido, 59555 Lippstadt (DE)
(74) Vertreter: Graefe, Jörg

(56) Entgegenhaltungen:
- EP-A- 1 041 226
- EP-A- 1 388 469
- DE-A1- 10 227 804
- US-B1- 6 386 447

## Beschreibung

Die Erfindung betrifft ein Steuermittel für eine Anordnung zum Sichern und Entsichern eines Kraftfahrzeuges sowie eine Anordnung zum Sichern und Entsichern eines Kraftfahrzeuges mit einem solchen Steuermittel.

Der Oberbegriff des Anspruchs 1 ist aus der DE 102 27 804 bekannt.

In der Druckschrift mit der Veröffentlichungsnummer EP 1 388 469 A1 wird eine Anordnung zum Sichern und Entsichern von Kraftfahrzeugen beschrieben. Die dort beschriebene Anordnung umfasst einen ersten und weitere benutzerseitig mitführbare ID-Geber. Derartige ID-Geber dienen der Identifikation und Überprüfung der Autorisierung des Benutzers, der den ID-Geber mit sich führt. Die Anordnung weist ferner zumindest eine fahrzeugseitige Sende-/Empfangseinheit für den Fahrzeuginnenraum und mindestens eine Sende-/Empfangseinheit für den Fahrzeugaußenraum zur drahtlosen Kommunikation der ID-Geber mit der übrigen Anordnung auf. Eine derartige Kommunikation kann beispielsweise der Identifikation der ID-Geber dienen. Die Anordnung weist ferner ein fahrzeugseitiges Steuermittel auf, das mit der Sende- und Empfangseinheit für den Fahrzeuginnenraum sowie mit der Sende-/Empfangseinheit für den Fahrzeugaußenraum verbunden ist. Das Steuermittel steuert ferner Sicherungsmittel an, bei denen es sich beispielsweise um Türschlösser, eine elektronische Wegfahrsperre oder ähnliches handeln kann. Über einen fahrzeugseitigen Auslöseschalter, der ebenfalls mit dem Steuermittel verbunden ist, kann der Benutzer den Sicherungsvorgang beziehungsweise den Entsicherungsvorgang einleiten.

Aufgrund eines von dem Auslöseschalter an das Steuermittel gesendeten Signals steuert das Steuermittel die Sende-/Empfangseinheit für den Fahrzeugsinnenraum und die Sende-/Empfangseinheit für den Fahrzeugaußenraum so an, dass der von dem Benutzer zum Beispiel mitgeführte erste ID-Geber identifiziert wird und anschließend von dem Steuermittel überprüft wird, ob der erste ID-Geber für das Sichern oder Entsichern des Fahrzeugs autorisiert ist. Ist der erste ID-Geber autorisiert, wird der Sicherungsbeziehungsweise Entsicherungsvorgang durchgeführt.

Die in der genannten Druckschrift beschriebene Anordnung ist so eingerichtet, dass nach einer Betätigung des Auslöseschalters über das Steuermittel eine Sende-/Empfangseinheit für den Fahrzeuginnenraum zur Aussendung eines Passivierungssignals an einen im Fahrzeuginnenraum befindlichen ID-Geber angesteuert wird. Durch dieses Passivierungssignal wird verhindert, dass sich ein Benutzer mit dem im Fahrzeuginnenraum befindlichen ID-Geber autorisiert ist, um das Fahrzeug zu sichern oder zu entsichern. Die Autorisierung des ID-Gebers wird gesperrt. Damit soll verhindert werden, dass nach einem Verlassen und Sichern des Fahrzeugs zufällig im Fahrzeug verbliebene ID-Geber von einem unbefugten Dritten benutzt werden kann, um das Fahrzeug zu entsichern und anschließend zu entwenden. Ferner ist es aus dem Stand der Technik bekannt, dass an dem vom Benutzer mitgeführten ersten ID-Geber eine Meldung gegeben werden kann, die dem Benutzer signalisiert, dass ein weiterer ID-Geber im Fahrzeuginnenraum ist.

Die in der Druckschrift beschriebene Anordnung hat sich in der Vergangenheit als zuverlässiger Schutz gegen die Entwendung des Fahrzeugs durch einen Dritten erwiesen. Problematisch ist die in der Druckschrift beschriebene Anordnung jedoch nur in den Fällen, in denen der von dem Benutzer zur Autorisierung benutzte erste ID-Geber zufällig beim Sichern oder Entsichern im Fahrzeuginnenraum ist oder von der Anordnung als im Fahrzeuginnenraum befindlich erkannt wird und anschließend entweder gesperrt und/oder als im Fahrzeuginnenraum vergessener Schlüssel an den Benutzer gemeldet wird. Zum einen wäre dann der erste ID-Geber, den der Benutzer zur Autorisierung benutzt, gegen eine weitere Verwendung zum Sichern oder Entsichern des Fahrzeugs gesperrt, zum anderen würde der Benutzer irrtümlich annehmen, dass ein weiterer ID-Geber im Fahrzeuginnenraum ist und diesen erfolglos suchen.

Hier setzt die vorliegende Erfindung an.

Der vorliegenden Erfindung liegt die Aufgabe zugrunde, eine Anordnung zum Sichern und Entsichern eines Kraftfahrzeuges sowie ein Steuermittel für eine solche Anordnung vorzuschlagen, die verhindern, dass der erste ID-Geber, der von dem Benutzer zur Autorisierung benutzt wurde, aber an den Benutzer als im Fahrzeuginnenraum verbliebener ID-Geber gemeldet wird.

Diese Aufgabe wird erfindungsgemäß durch ein Steuermittel nach Anspruch 1 und eine Anordnung nach Anspruch 4 gelöst. Weitere Ausgestaltungen des erfindungsgemäßen Steuermittels sind in den Unteransprüchen 2 und 3 angegeben.

Ein erfindungsgemäßes Steuermittel für eine Anordnung zum Sichern und Entsichern eines Kraftfahrzeuges ist demnach so ausgestaltet, dass mittels des Steuerungsmittels bei Vorliegen eines durch den Benutzer ausgelösten Anforderungssignals eine Autorisierung eines ersten ID-Gebers zum Sichern des Fahrzeugs überprüfbar ist. Ferner ist mittels des Steuermittels zumindest ein Sicherungsmittel zum Sichern des Kraftfahrzeugs ansteuerbar. Mittels des Steuermittels ist ferner zumindest eine Sende-/Empfangseinheit für den Fahrzeuginnenraum für eine Suche nach ID-Gebern ansteuerbar. Bei einer erfolgreichen Suche werden mittels des Steuermittels die Identifikationscodes der aufgefundenen ID-Geber mit dem Identifikationscode des ersten ID-Gebers auf Übereinstimmung überprüft. Das Ergebnis dieser Überprüfung wird dann für weitere Aktionen genutzt, zum Beispiel wird bei einer erfolgreichen Suche eine Anzeige zum Anzeigen des Erfolgs der Suche zum Beispiel in dem ersten ID-Geber angesteuert. Schließlich ist mittels des Steuergeräts bei erfolgreicher Suche und Übereinstimmung von Identifikationscodes der aufgefundene ID-Geber mit dem Identifikationscode des ersten ID-Gebers die Anzeige so ansteuerbar, dass eine Anzeige unterbleibt, wenn der erste ID-Geber der einzige aufgefundene ID-Geber ist.

Es bei einer erfolgreichen Suche möglich, dass mittels des Steuergeräts dem oder den aufgefundenen ID-Gebern zumindest zeitweise die Autorisierung zum Sichern oder Entsichern des Fahrzeugs entzogen wird.

Alternativ ist es möglich, dass mittels des Steuergeräts bei erfolgreicher Suche und Übereinstimmung eines der Identifikationscodes der aufgefundenen ID-Geber mit dem Identifikationscode des ersten ID-Gebers dem ersten ID-Geber die Autorisierung verbleibt. Der Benutzer kann dann weiterhin mit dem ersten ID-Geber das Fahrzeug sichern oder entsichern.

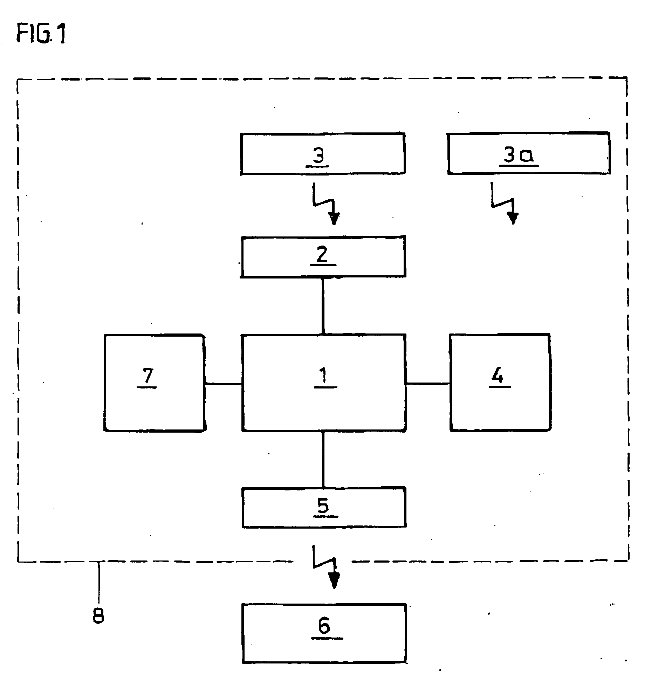

Ein Ausführungsbeispiel für eine erfindungsgemäße Anordnung zum Sichern und Entsichern eines Kraftfahrzeuges ist anhand der Zeichnung näher erläutert. Darin zeigt
- Fig. 1: ein Blockschaltbild der erfindungsgemäßen Anordnung.

Die erfindungsgemäße Anordnung gemäß Fig. 1 weist ein Steuermittel 1 auf, mit dem verschiedene Sicherungsmittel 4, von denen nur ein Sicherungsmittel 4 dargestellt ist, ansteuerbar sind. Bei den Sicherungsmitteln 4 kann es sich um eine elektronische Wegfahrsperre, Türschlösser, Haubenschlösser oder andere Sicherungseinrichtungen, zum Beispiel für elektronische Geräte, wie Autoradios oder dergleichen handeln. Die Sicherungsmittel 4 können so angesteuert werden, dass das Kraftfahrzeug entweder gesichert oder entsichert wird.

Das Steuermittel 1 steuert die Sicherungsmittel 4 zum Sichern oder Entsichern des Kraftfahrzeuges an, sobald es ein Auslösesignal, das durch einen Benutzer verursacht wird, empfängt. Das Auslösesignal wird bei dem in der Fig. 1 dargestellten Ausführungsbeispiel von einem fahrzeugseitigen Sensor 7 erzeugt. Es kann sich dabei um einen Sensor handeln, der auf bekannte Art und Weise im Bereich eines Handgriffs einer Tür angeordnet ist. Damit nicht jedes Auslösesignal insbesondere durch einen Unbefugten ein Entsichern beziehungsweise Sichern des Kraftfahrzeugs bewirken kann, muss neben dem Vorliegen des Auslösesignals für die entsprechende von dem Steuermittel 1 zu steuernde Handlung auch eine positive Überprüfung der Berechtigung des Benutzers erfolgt sein. Dazu führen die berechtigten Benutzer sogenannte ID-Geber 3, 3a, 6 mit sich. Die ID-Geber sind über eine drahtlose Verbindung mit Sende-/Empfangseinheiten der übrigen Anordnung verbindbar, wobei diese Sende-/Empfangseinheiten 2, 5 mit dem Steuermittel 1 verbunden sind, um die Autorisierung der ID-Geber 3, 3a, 6 zu überprüfen.

Die Überprüfung der Autorisierung der ID-Geber erfolgt dabei folgendermaßen: Sobald das Steuermittel 1 vom Sensor 7 das Auslösesignal empfängt, steuert das Steuermittel 1 die Sende-/Empfangseinheiten 2, 5 so an, dass eine Suche nach ID-Gebern 3, 6 im Empfangsbereich einer der Sende-/Empfangseinheiten 2, 6 stattfindet. Sofern ein ID-Geber 3, 3a, 6 erkannt wird und dieser ID-Geber 3, 3a, 6 auch die Autorisierung zum Sichern beziehungsweise Entsichern des Fahrzeugs hat, wird dann das entsprechende Steuersignal von dem Steuermittel 1 auf die Sicherungsmittel 4 gegeben.

Die erfindungsgemäße Anordnung gemäß Fig. 1 weist dabei eine Sende-/Empfangseinheit 2 für den Fahrzeuginnenraum und eine Sende-/Empfangseinheit 5 für das Äußere des Fahrzeugs auf. Mit der Sende-/Empfangseinheit 2 für den Fahrzeuginnenraum wird der Fahrzeuginnenraum und unter Umständen ein äußerer Bereich des Kraftfahrzeugs erfasst, der im Bereich von Fenstern, insbesondere von geöffneten Fenstern ist. Mit der Sende-/Empfangseinheit 5 für den Fahrzeugaußenraum wird ein das Kraftfahrzeug umgebender Bereich erfasst. Die Grenze zwischen Fahrzeuginnenraum und Fahrzeugaußenraum ist mit der gestrichelten Linie 8 angedeutet. ID-Geber 3, 3a, 6 in den erfassten Bereichen werden von den entsprechenden Sende-/Empfangseinheiten 2, 5 erkannt.

Wie bereits ausgeführt, wird durch ein von einem Benutzer ausgelöstes Auslösesignal an das Steuermittel 1 durch das Steuermittel 1 die Sende- und Empfangseinheiten 2, 5 angesteuert, um eine Kommunikation mit einem ID-Geber zur Überprüfung der Autorisierung des Benutzers durchzuführen. Ist der Benutzer beispielsweise durch den ersten im Fahrzeuginnenraum befindlichen ID-Geber 3 autorisiert worden, werden durch das Steuermittel 1 die Sicherungsmittel 4 angesteuert, um beispielsweise den Sicherungsvorgang durchzuführen. Dabei wird beispielsweise das Kraftfahrzeug verschlossen und die Wegfahrsperre aktiviert. Um zu verhindern, dass ein in dem Kraftfahrzeug vergessener weiterer ID-Geber 3a durch unbefugte Dritte dazu benutzt werden kann, das Fahrzeug zu entwenden, ist die erfindungsgemäße Anordnung so eingerichtet, dass durch das Steuermittel 1 nach beziehungsweise während der Sicherung des Kraftfahrzeugs im Kraftfahrzeug befindliche, d. h. im Sende- und Empfangsbereich der Sende-/Empfangseinheit 2 für den Innenraum befindliche ID-Geber 3, 3a gesperrt werden. Ferner wird an den ID-Geber 3, der die Durchführung des Sicherungsvorgangs autorisiert hat, im vorliegenden Beispiel handelt es sich dabei um den ersten ID-Geber 3, eine Meldung gegeben, die besagt, dass sich ID-Geber im Fahrzeuginnenraum befinden.

In der Praxis kann es vorkommen, dass der erste ID-Geber 3, der den Sicherungsvorgang autorisiert innerhalb des Sende- und Empfangsbereichs der Sende-/Empfangseinheit 2 für den Innenraum befindet. Der erste ID-Geber 3 kann dabei als einziger ID-Geber im Fahrzeuginnenraum sein oder aber in einem Bereich außerhalb des Fahrzeugs, auf den sich der Sende-/Empfangsbereich der Sende- und Empfangseinheit 2 für den Fahrzeuginnenraum gerade noch erstreckt. Der erste ID-Geber 3. der der ID-Geber ist, der von dem Benutzer für die Autorisierung des Sicherungsvorgangs benutzt wurde, wäre in einem solchen Fall gesperrt und es würde angezeigt, dass sich ein ID-Geber im Fahrzeuginnenraum befindet. Eine Sperrung des ersten ID-Gebers 3 ist jedoch nicht sinnvoll, da der Benutzer anschließend diesen ersten ID-Geber 3 nicht mehr für ein Entsichern des Fahrzeugs benutzen kann. Die Anzeige, dass sich ein ID-Geber im Fahrzeuginnenraum befindet, ist für den Benutzer oftmals verwirrend, da der Benutzer vermutet, dass neben dem ersten ID-Geber 3 ein weiterer ID-Geber 3a innerhalb des Fahrzeuges ist.

Bei der erfindungsgemäßen Anordnung ist das Steuermittel 1 daher so eingerichtet, dass überprüft wird, ob ein Identifikationscode des ersten ID-Gebers 3 mit einem Identifikationscode der ID-Geber 3, 3a übereinstimmt, die bei der ID-Gebersuche im Fahrzeuginnenraum beziehungsweise im Sende- und Empfangsbereich der Sende-/Empfangseinheit 2 aufgefunden wurden. Besteht eine Übereinstimmung, wird der erste ID-Geber 3 nicht gesperrt. Sofern sich auch kein zweiter ID-Geber im Sende- und Empfangsbereich der Sende-/Empfangseinheit 2 befindet, wird auch keine Meldung an den ersten ID-Geber 3 gesandt, dass sich weitere ID-Geber im Fahrzeuginnenraum befinden. Befinden sich dagegen tatsächlich weitere ID-Geber 3a im Sende- und Empfangsbereich der Sende-/Empfangseinheit 2 für den Fahrzeuginnenraum, wird dieser weitere ID-Geber 3a gesperrt und eine Meldung, dass sich ein weiterer ID-Geber im Fahrzeuginnenraum befindet, an den ersten ID-Geber 3 gesandt.

Die erfindungsgemäße Anordnung ist ferner so eingerichtet, dass auch bei einem Entsichern des Kraftfahrzeuges durch einen Benutzer, der durch den ersten ID-Geber 3 autorisiert ist, eine ID-Gebersuche nach ID-Gebern 3, 3a im Sende- und Empfangsbereich der Sende-/Empfangseinheit für den Fahrzeuginnenraum durchgeführt wird. Auch nach dieser Suche findet dann eine Überprüfung beziehungsweise einen Vergleich des Identifikationscodes des ersten ID-Gebers 3 mit den Identifikationscodes der aufgefundenen ID-Geber 3. 3a statt. Befindet sich neben dem ersten ID-Geber 3 ein weiterer ID-Geber 3a im Sende- und Empfangsbereich oder befindet sich nur ein weiterer ID-Geber 3a im Sende- und Empfangsbereich der Sende-/Empfangseinheit für den Fahrzeuginnenraum, wird dieser weitere ID-Geber gesperrt und eine Meldung an den ersten, den Entsicherungsvorgang autorisierenden ID-Geber 3 gesandt, mit dem Inhalt, dass sich ein weiterer ID-Geber 3a im Fahrzeuginnenraum befindet.

## Patentansprüche

1. Steuermittel für eine Anordnung zum Sichern und Entsichern eines Kraftfahrzeugs, wobei mittels des Steuermittels (1)
- bei Vorliegen eines durch den Benutzer ausgelösten Anforderungssignal eine Autorisierung eines ersten ID-Gebers (3) zum Sichern des Fahrzeugs überprüfbar ist,
- daraufhin zumindest ein Sicherungsmittel (4) zum Sichern des Kraftfahrzeugs ansteuerbar ist,
- zumindest eine Sende-/Empfangseinheit (2) für den Fahrzeuginnenraum für eine Suche nach ID-Gebern (3, 3a) ansteuerbar ist,
**dadurch gekennzeichnet, dass**
bei erfolgreicher Suche mittels des Steuermittels (1) die Identifikationscodes der aufgefundenen ID-Geber (3, 3a) mit dem Identifikationscode des ersten ID-Gebers (3) auf Übereinstimmung überprüfbar sind, dass mittels des Steuermittels (1) bei erfolgreicher Suche eine Anzeige zum Anzeigen des Erfolgs ansteuerbar ist und dass mittels des Steuergeräts (1) bei erfolgreicher Suche und Übereinstimmung eines der Identifikationscodes der aufgefundenen ID-Geber (3) mit dem Identifikationscode des ersten ID-Gebers (3) die Anzeige so ansteuerbar ist, das eine Anzeige unterleibt, wenn der erste ID-Geber (3) der einzige aufgefundene ID-Geber (3) ist.

2. Steuermittel nach Anspruch 1 oder 2, **dadurch gekennzeichnet, dass** mittels des Steuergeräts (1) bei erfolgreicher Suche dem oder den aufgefundenen ID-Gebern (3a) zumindest zeitweise die Autorisierung zum Sichern oder Entsichern des Fahrzeugs entziehbar ist.

3. Steuermittel nach Anspruch 1 oder 2, **dadurch gekennzeichnet, dass** mittels des Steuergeräts (1) bei erfolgreicher Suche und Übereinstimmung eines der Identifikationscodes der aufgefundene ID-Geber (3, 3a) mit dem Identifikationscode des ersten ID-Gebers (3) dem ersten ID-Geber (3) die Autorisierung verbleibt.

4. Anordnung zum Sichern und Entsichern eines Kraftfahrzeugs
- mit einem ersten und weiteren benutzerseitig mitführbaren ID-Gebern (3, 3a, 6) mit einem eindeutigen Identifikationscode zum Identifizieren des Benutzers,
- mit zumindest einer Sende-/Empfangseinheit (2) für den Fahrzeuginnenraum zur Kommunikation mit den ID-Gebern (3, 3a),
- mit zumindest einem Sicherungsmittel (4) und
- mit einem Steuermittel (1) nach einem der Ansprüche 1 bis 3.

## Claims

1. Control means for an arrangement for securing and releasing a motor vehicle, wherein, by means of the control means (1),
- an authorization of a first ID signal transmitter (3) for securing the vehicle can be checked when a request signal triggered by the user is present,
- at least one securing means (4) for securing the motor vehicle can then be actuated,
- at least one transceiver unit (2) for the passenger compartment of the vehicle can then be actuated in order to search for ID signal transmitters (3, 3a)
**characterized in that**, in the event of a successful search by means of control means (1), the identification codes of the ID signal transmitters (3, 3a) which have been found can be checked with the identification code of the first ID signal transmitter (3) for correspondence, **in that** in the event of a successful search the control means (1) can be used to actuate a display for displaying the success, and **in that** in the event of a successful search and correspondence between one of the identification codes of the ID signal transmitters (3) which have been found and the identification code of the first ID signal transmitter (3) the control device (1) can be used to actuate the display in such a way that a display does not occur if the first ID signal transmitter (3) is the only ID signal transmitter (3) found.

2. Control means according to Claim 1, **characterized in that** in the event of a successful search the control device (1) is used to withdraw at least temporarily the authorization to secure or release the vehicle from the ID signal transmitter or transmitters (3a) which have been found.

3. Control means according to Claim 1 or 2, **characterized in that** in the event of a successful search and correspondence between one of the identification codes of the ID signal transmitters (3, 3a) which have been found and the identification code of the first ID signal transmitter (3) the control device (1) is used to allow authorization to stay with the first ID signal transmitter (3).

4. Arrangement for securing and releasing a motor vehicle
- having a first and further ID signal transmitters (3, 3a, 6) which can be carried by the user and which have a uniquely defined identification code for identifying the user,
- having at least one transceiver unit (2) for the passenger compartment of the vehicle for communication with the ID signal transmitters (3, 3a),
- having at least one securing means (4), and
- having a control means (1) as claimed in one of Claims 1 to 3.

## Revendications

1. Moyen de commande pour un arrangement destiné à activer et à désactiver un système antivol d'un véhicule automobile, le moyen de commande (1) permettant,
- en présence d'un signal de demande déclenché par l'utilisateur, de contrôler une autorisation d'un premier générateur d'identifiant (3) destiné à activer le système antivol du véhicule,
- ensuite de commander au moins un dispositif antivol (4) destiné à protéger le véhicule automobile,
- de commander au moins une unité d'émission/réception (2) pour l'espace intérieur du véhicule pour une recherche de générateurs d'identifiant (3, 3a),
**caractérisé en ce que**
si la recherche aboutit, la concordance entre les codes d'identification du générateur d'identifiant (3, 3a) trouvé et le code d'identification du premier générateur d'identifiant (3) peut être contrôlée à l'aide du moyen de commande (1), **en ce que** si la recherche aboutit, un indicateur destiné à indiquer la réussite peut être commandé à l'aide du moyen de commande (1) et **en ce que** si la recherche aboutit et s'il y a concordance entre l'un des codes d'identification du générateur d'identifiant (3) trouvé et le code d'identification du premier générateur d'identifiant (3), l'indicateur peut être commandé à l'aide de l'appareil de commande (1) de telle sorte qu'une indication n'a pas lieu lorsque le premier générateur d'identifiant (3) est l'unique générateur d'identifiant (3) trouvé.

2. Moyen de commande selon la revendication 1, **caractérisé en ce que** si la recherche aboutit, l'autorisation d'activation ou de désactivation du dispositif antivol du véhicule peut être prélevée au moins temporairement du ou des générateurs d'identifiant (3a) trouvés à l'aide du moyen de commande (1).

3. Moyen de commande selon la revendication 1 ou 2, **caractérisé en ce que** si la recherche aboutit et s'il y a concordance entre l'un des codes d'identification du générateur d'identifiant (3, 3a) trouvé et le code d'identification du premier générateur d'identifiant (3), l'autorisation demeure auprès du premier générateur d'identifiant (3) à l'aide du moyen de commande (1).

4. Arrangement pour activer et désactiver un système antivol d'un véhicule automobile
- comprenant un premier et d'autres générateurs d'identifiant (3, 3a, 6) pouvant être emportés par l'utilisateur avec un code d'identification unique pour identifier l'utilisateur,
- comprenant au moins une unité d'émission/réception (2) pour l'espace intérieur du véhicule destinée à la communication avec les générateurs d'identifiant (3, 3a),
- comprenant au moins un dispositif antivol (4) et
- comprenant un moyen de commande (1) selon l'une des revendications 1 à 3.
